# EUROPÄISCHE PATENTSCHRIFT

(11) **EP 0 477 396 B1**
(45) Veröffentlichungstag und Bekanntmachung des Hinweises auf die Patenterteilung: **13.09.1995**
(21) Anmeldenummer: 90118383.0
(22) Anmeldetag: 25.09.1990
(51) Int. Cl.: G05B 19/41

(54) **Verfahren zur Ermittlung von Werkzeugbahn-Konturen bei numerisch gesteuerten Maschinen**
Method to determine the contour of the machine tool path by a numerically controlled machine
Procédé pour déterminer le contour de trajectoire de l'outil pour machines à commande numérique

(43) Veröffentlichungstag der Anmeldung: 01.04.1992
(73) Patentinhaber: Dr. Johannes Heidenhain GmbH, D-83292 Traunreut (DE)
(72) Erfinder: Vollmayr, Norbert, Dipl.-Ing., D-8221 Traunwalchen (DE)

(56) Entgegenhaltungen:
- EP-A- 0 175 792
- Proceedings 1986 IEEE INTERNATIONAL CONFERENCE ON ROBOTICS AND AUTOMATION, vol. 1, 10 April 1986, San Francisco, California, US; Seiten 156-165; U.A. Sungurtekin et al: "GRAPHICAL SIMULATION & AUTOMATIC VERIFICATION OF NC MACHINING PROGRAMS"

## Beschreibung

Die Erfindung betrifft ein Verfahren mit einer nummerischen Steuerung zur Bearbeitung von Werkstücken gemäß dem Oberbegriff des Anspruches 1.

Bei numerisch gesteuerten Werkzeugmaschinen ist es bekannt, die Daten für die Herstellung eines Werkstückes aus einem Werkstücksrohling in Form von Werkzeugbahn-Daten durch ein NC-Programm zu bestimmen. Dazu ist erforderlich, die Kontur des herzustellenden Werkstückes mit dem Werkzeugradius zu korrigieren, da für die Maschine nicht die Werkstückkontur, sondern die Werkzeugmittelpunkt-Bahn relevant ist.

Für NC-Steuerungen ist das Berechnen der korrigierten Schnittkontur eines beliebigen Körpers eine komplexe und rechenintensive Aufgabe.

Als beispielhafter Stand der Technik sei das Dokument EP-A1-0 175 792 genannt, dessen Gegenstand ein Verfahren mit einer numerischen Steuerung zur Bearbeitung von Werkstücken ist, bei dem durch Verknüpfung von Werkstück-Rohlingsdaten mit Werkzugbahn-Daten Schnittlinien von mathematisch definierbaren Konturen gebildet werden. Von einem derartigen Verfahren geht die Erfindung aus.

Die Schwierigkeiten liegen hier schon in der Definition eines komplexen Körpers und seiner Oberfläche und dann in der Berechnung einer Äquidistanten für die Fräserradiuskorrektur unter Berücksichtigung möglicher Kollisionen bei vorgegebener Genauigkeit. Entsprechend hoch ist der erforderliche Einsatz an Rechenkapazität und Speicherkapazität. Um solche Berechnungen durchzuführen, ist auf dem Rechner der NC-Steuerung zusätzliche Hard- und Software notwendig. Dazu gehören beispielsweise spezielle Arithmetikprozessoren, aber auch geometrische Verfahren und Darstellungsmethoden zur Beschreibung von Freiformflächen.

Relativ komplexe Körperkonturen lassen sich aus einfachen Konturstücken wie Kreisen und Geraden zusammenstellen. Die Werkzeugradiuskorrekturen lassen sich an diesen einfachen Konturen leicht durchführen, jedoch ist es problematisch, aus den einzelnen korrigierten Konturen die resultierende Werkzeugbahn zu ermitteln, da es bei den einzeln korrigierten Konturen durch deren Zusammenfassung zu Überschneidungen kommt.

Der Erfindung liegt die Aufgabe zugrunde, bei einer beliebig zusammengesetzten Kontur die zulässigen Randpunkte zu ermitteln, deren Abfolge der Werkzeugbahn entspricht, die die Kontur des Werkstückes erzeugt.

Diese Aufgabe wird durch ein Verfahren mit den Merkmalen des Anspruches 1 gelöst.

Die Vorteile dieses Verfahrens liegen darin, daß auf einfache Weise bei einer komplexen Kontur die erforderlichen Fräserbahn-Daten durch die ermittelten zulässigen Randpunkte gewonnen werden können.

Mit Hilfe von Ausführungsbeispielen wird die Erfindung anhand der Zeichnungen noch näher erläutert.

Es zeigt
- Figur 1: eine Schnittlinie zwischen der Oberfläche eines Werkstückes und der Bearbeitungsebene und
- Figur 2: eine tiefengestaffelte Darstellung einer Schnittbearbeitung.

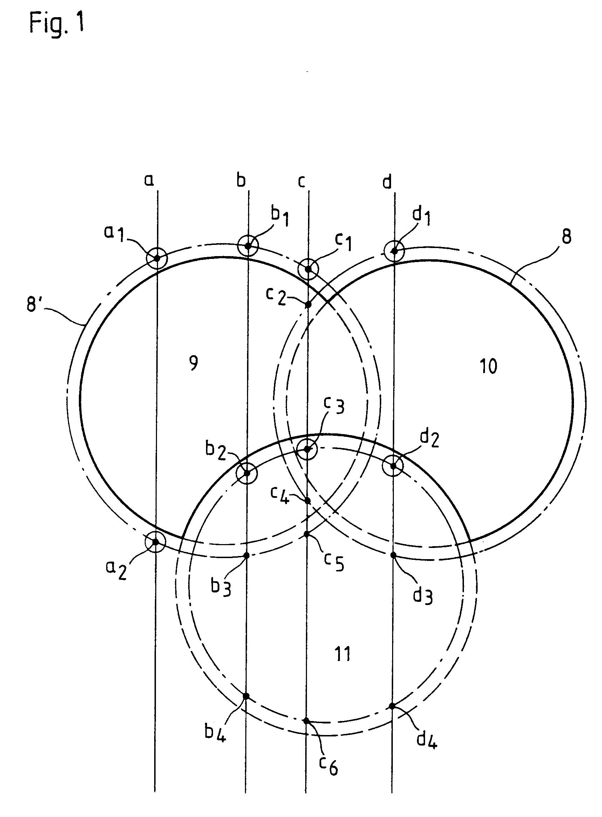

Für die in Figur 1 dargestellte Schnittlinie erfolgt die Ermittlung der gültigen (zulässigen) Randpunkte durch mengentheoretische (Bool'sche) Operationen.

In Figur 1 ist die Draufsicht auf ein Werkstück 8 und seinen korrigierten Körper 8′ gezeigt, das aus drei Grundkörpern in Form von Zylindern gebildet ist. Die Draufsicht stellt eine Schnittlinie zwischen der Oberfläche des Werkstückes 8 und der jeweiligen Bearbeitungsebene dar. Die Zylinder tragen die Bezeichnungen 9, 10 und 11, wobei 9 und 10 positive Zylinder darstellen und 11 als negativer Zylinder bei der Zusammensetzung des Werkstückes 8 subtrahiert werden muß.

Um ein solches Werkstück 8 herstellen zu können, werden zu den Elementar-Zylindern 9, 10 und 11 um den Fräserradius korrigierte Zylinder erzeugt und mengenalgebraisch verknüpft. Daraus werden die korrigierten Fräserbahn-Daten ermittelt. Bei der Erzeugung der korrigierten Grundkörper wird bereits festgestellt, ob der jeweilige Grundkörper ein Positiv-Körper oder ein Negativ-Körper ist. Mit mengenalgebraischen Operationen werden nachstehend anhand einer Tabelle die gültigen Randpunkte für die Fräserbahn ermittelt.

Um die gültigen Randpunkte zu ermitteln, werden über den dargestellten korrigierten Körper 8′ in einem bestimmten Raster Hilfslinien gelegt. Die Folge der gültigen Randpunkte entspricht der Fräserbahn, die die Kontur des Werkstückes 8 erzeugt.

Zur Verdeutlichung sind lediglich vier Hilfslinien a, b, c, d dargestellt, die aber das Prinzip verständlich machen.

Die Grundbedingung der hier vorliegenden Mengenoperation lautet für die drei Zylinder: 9 und 10 bilden eine Vereinigungsmenge, von der die Menge 11 subtrahiert wird:
(9 \/ 10)\11

Die folgenden Randpunktbetrachtungen werden immer an den Konturen der korrigierten Körper 9, 10 und 11 durchgeführt.

Die Hilfslinie a schneidet sich am Punkt a1 mit dem Zylinder 9 (bzw. mit dessen korrigierter Kontur).

a1 ist Randpunkt (R) von Zylinder 9 und liegt außerhalb (A) von Zylinder 10, also ist a1 bei der Vereinigungsmenge (9 \/ 10) ein gültiger Randpunkt.

Zur Vereinigungsmenge (9 \/ 10) bildet 11 die Differenzmenge. Dafür gilt: a1 ist Randpunkt (R) von der Vereinigungsmenge (9 \/ 10) und liegt außerhalb (A) von Zylinder 11; a1 ist also auch für die Differenzmenge (9 \/ 10)\11 ein gültiger Randpunkt.

Tabellarisch ausgedrückt:

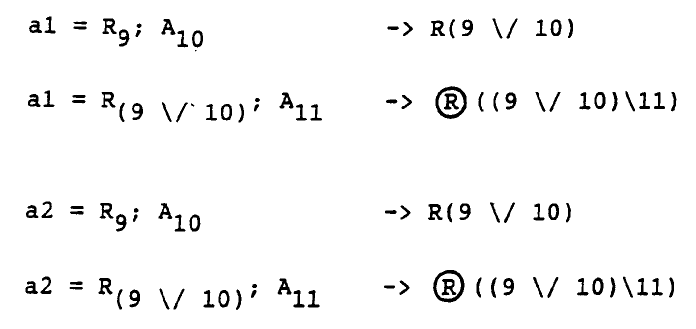

Beide Schnittpunkte a1 und a2 sind demgemäß gültige Randpunkte, die der Fräser anfahren darf. Gültige Randpunkte werden in den Tabellen und in Figur 1 mit einem konzentrischen Kreis um den jeweiligen Punkt kenntlich gemacht, der einen Kugelfräser symbolisieren soll.

Für die Hilfslinie b ergibt sich analog:

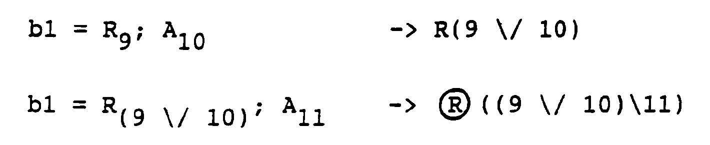

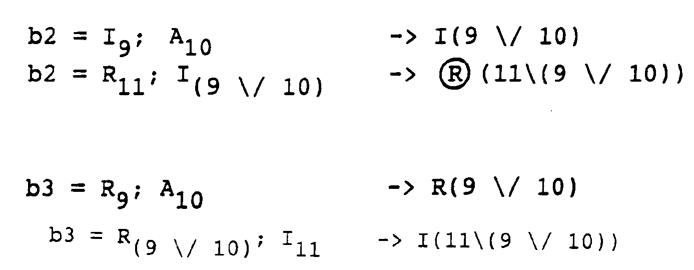

Da Punkt b3 nicht für alle Bedingungen gültig ist, stellt er keinen gültigen Randpunkt für die Bearbeitung dar.

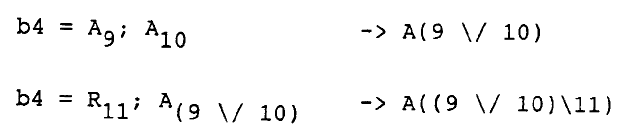

Bei der Hilfslinie b sind also nur die Randpunkte b1 und b2 gültige Fräserbahn-Punkte. Für die Hilfslinie C gilt:

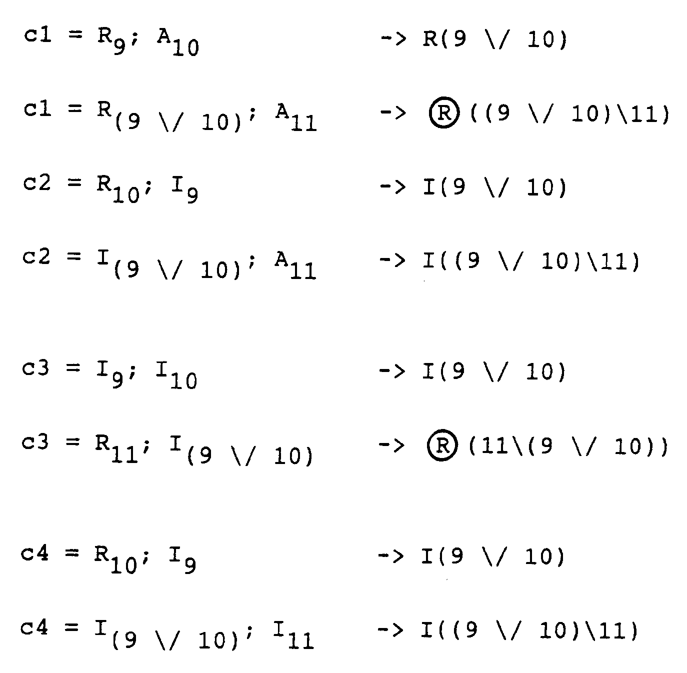

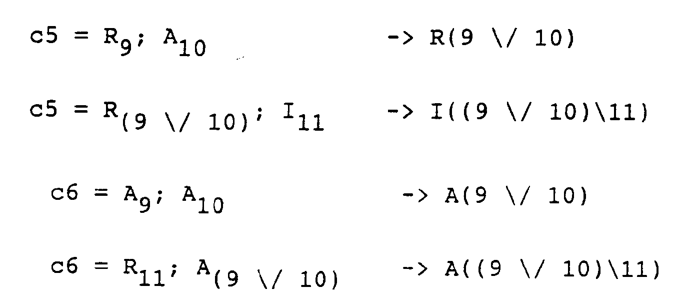

Bei der Hilfslinie c sind demgemäß die Randpunkte c1 und c3 gültige Fräserbahn-Punkte.

Für die Hilfslinie d gilt die Betrachtung:

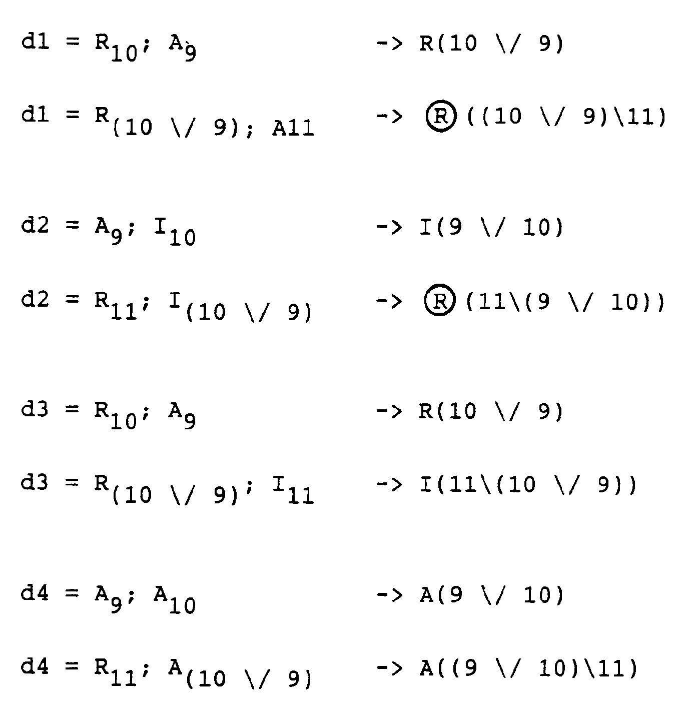

Bei der Betrachtung der stärker ausgezogenen Begrenzungslinie des Werkstückes 8 zeigt sich, daß alle als gültige Punkte erkannten Randpunkte a1, a2; b1, b2; c1, c3; d1, d2 auf der korrigierten Kontur, also auf einer Äquidistanten zur Werkstückkontur liegen, deren Abstand dem Radius eines Kugelfräsers entspricht.

Die Lage der hier betrachteten Hilfslinien ist willkürlich. Bei der Realisierung der Erfindung liegen die Hilfslinien so eng beieinander, daß sich beim Fräsen eine kontinuierlich verlaufende Fräserbahn ergibt.

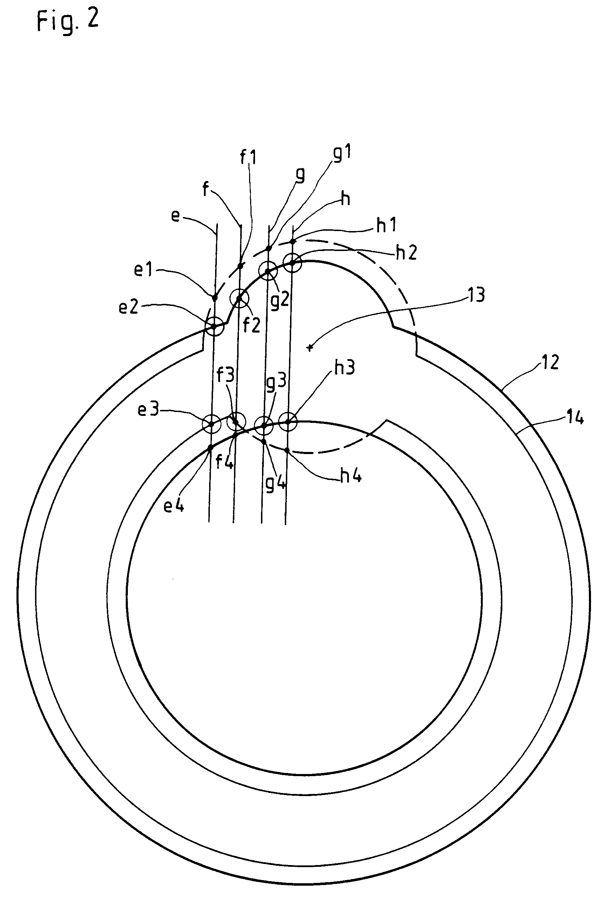

Gleiches gilt auch für das Ausführungsbeispiel aus Figur 2. Hier ist ein Schnitt durch ein Werkstück dargestellt, das eine sogenannte Tiefenstaffelung hat. Der große Kreisring 12 soll einen in die Tiefe der Zeichenebene sich erstreckenden Torus mit halbkreisförmigem Querschnitt begrenzen. Im oberen Teil der Figur 2 wird dieser Torus von einem Kegel geschnitten, der sich aus der Zeichnungsebene heraus erstreckt und dessen Spitze symbolisch durch einen Punkt 13 markiert ist.

Prinzipiell erfolgt bei diesem Beispiel die Ermittlung der zulässigen (gültigen) Randpunkte nach dem gleichen mengentheoretischen Prinzip wie beim Beispiel aus Figur 1. Eine Besonderheit - nicht im Prinzip, sondern bedingt durch die Tiefenstaffelung - liegt darin, daß für die schichtweise Bearbeitung immer die Kontur 12 der jeweils oberen Schicht maßgeblich dafür ist, ob ein Randpunkt einer unteren, gerade aktuell bearbeiteten Schicht 14 zulässig ist, oder nicht.

Dieser Sachverhalt wird verständlich durch die Überlegung, daß ein realer Bearbeitungsvorgang in die Tiefe eines Werkstückrohlings immer mit der Bearbeitung der obersten Schicht beginnt und sich schichtweise nach unten fortsetzt.

Eine Kontur, die für die oberste Schicht als zulässig ermittelt wurde, darf aber nicht durch eine tiefer liegende Kontur verletzt werden.

Aus diesem Grund bildet in derartige Fällen zumindest die oberste Schicht eine Art Maske, die bei allen anschließenden Randpunktbetrachtungen mit einbezogen werden muß.

Bei jeder Folgeschicht sind also nur Punkte erlaubt, die innerhalb oder auf dem Rand der momentanen Fläche und innerhalb oder auf dem Rand der darüberliegenden Fläche (Maske) liegen, da sonst die darüberliegende Schicht verletzt würde.

Für die Ermittlung der gültigen Randpunkte wird über die Schnittfläche wieder ein hinreichend enges Raster von Hilfslinien e, f, g, h gelegt. Mit Hilfe der Mengenoperationen werden von den Schnittpunkten mit den Hilfslinien e, f, g, h die gültigen Randpunkte e2, e3; f2, f3; g2, g3; h2, h3 ermittelt.

Alle gültigen Randpunkte e2, e3; f2, f3; g2, g3; h2, h3 werden in einer Liste mit einer durch die Hilfslinien e, f, g, h gegebenen Ordnungsrelation (aufsteigende Reihenfolge) abgespeichert.

Für jede Hilfslinie e, f, g, h sind neben den nach dem Vereinigungsalgorithmus gültigen Punkten der aktuellen Schicht 14 auch die Randpunkte der darüberliegenden Maske 12 bekannt.

Um die erlaubten Punkte herauszufinden müssen die Punkte von Hilfslinien die übereinander liegen in Relation gebracht werden.

Da die Punkte einer Hilfslinie in eine aufsteigende Reihenfolge gebracht sind, durchkreuzen die Verbindungen von zwei aufeinanderfolgenden Punkten abwechselnd innere und äußere Bereiche der aktuellen Schicht 14.

Gültige Randpunkte sind entweder Punkte der aktuellen Schicht 14, die in inneren Bereichen der Maske 12 liegen, oder Randpunkte der Maske 12, die in inneren Bereichen der aktuellen Schicht 14 liegen.

Für die Schnittlinien der Konturen 12 und 14 wird gemäß der Mengentheorie die "Schnittmenge" gebildet.

Analog zu den Erläuterungen des Beispiels 1 gilt in verkürzter Form:

Die Hilfslinie e schneidet sich am Punkt e1 mit der Kontur 14 (aktuelle Schicht).
e1 ist zwar Randpunkt (R) von 14, liegt aber außerhalb (A) der Maske 12, also ist e1 kein gültiger Randpunkt.
e2 ist Randpunkt (R) der Maske 12 und liegt innerhalb (I) der aktuellen Schicht 14, also ist e2 gültig.
   e2 -> Ⓡ
e3 liegt innerhalb (I) der Maske 12 und innerhalb (I) der aktuellen Schicht 14, also ist e3 ebenfalls gültig.
   e3 -> Ⓡ
e4 ist Randpunkt (R) der Maske 12, liegt aber außerhalb (A) der aktuellen Schicht 14, also ist er nicht gültig, 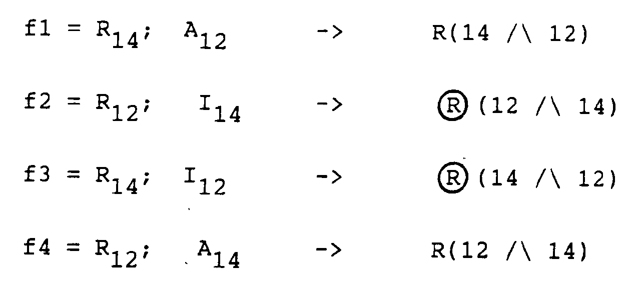
f2 und f3 sind also gültige Randpunkte Ⓡ. 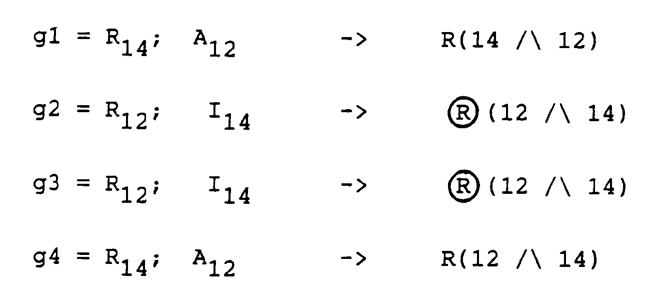
g2 und g3 sind demnach gültige Randpunkte Ⓡ. 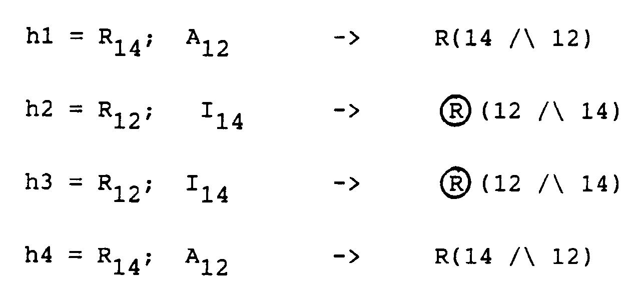
h2 und h3 sind also gültige Randpunkte Ⓡ.

## Patentansprüche

1. Verfahren mit einer numerischen Steuerung zur Bearbeitung von Werkstücken (8), bei dem ein Modell des herzustellenden Werkstückes (8) mit Hilfe von mengentheoretischen Operationen - wie Vereinigungs-, Schritt- und/oder Differenzmengen-Bildung - aus mathematisch leicht definierbaren Elementarkörpern (9, 10, 11) aufgebaut wird, wobei diese Elementarkörper (9, 10, 11) jeweils vollständig um den Werkzeugradius korrigiert werden, wodurch sich die Kontur eines Vereinigungskörpers nach außen und die Kontur eines Differenzkörpers nach innen verlagert und diese korrigierten Konturen (8, 12, 14) potentielle Werkzeugmittelpunkts-Bahnen sind, und bei dem die für die Herstellung des Werkstückes (8) tatsächlich benötigten Werkzeugmittelpunkts-Bahndaten mit Hilfe von Schnittpunkten (a₁ bis h₄) zwischen einem Raster von Hilfslinien (a, b, c, d; e, f g, h) einerseits und den potentiellen Werkzeugmittelpunkts-Bahnen (8′) andererseits ermittelt werden, wobei die Schnittpunkte (a₁ bis h₄) auf Zugehörigkeit mit einem Körper untersucht werden, der unter Anwendung der vorstehenden mengentheoretischen Operationen auf die korrigierten Elementarkörper entsteht.

## Claims

1. Numerically-controlled method of machining workpieces (8), in which a model of the workpiece (8) to be produced is constructed, with the aid of quantum-theory operations such as the formation of unions of sets, increments and/or differences of sets, from mathematically easily-definable primary members (9, 10, 11), these primary members (9, 10, 11) being respectively fully corrected around the workpiece radius, by means of which the contour of a unification member is displaced outwards and the contour of a difference member is displaced inwards, and these corrected contours (8, 12, 14) are potential centre-lines of tool travel, and in which the tool path centre-line data actually required for manufacture of the workpiece (8) are determined with the aid of intersection points (a₁ to h₄) between a grid of subsidiary lines (a, b, c, d; e, f, g, h) on the one hand and the potential centre-lines of tool travel (8′) on the other hand, the intersection points (a₁ to h₄) being investigated for association with a member which arises during application of the abovenamed quantum-theory operations to the corrected primary members.

## Revendications

1. Procédé faisant appel à une commande numérique pour l'usinage de pièces (8), suivant lequel on établit un modèle de la pièce (8) à fabriquer à l'aide d'opérations de la théorie des ensembles, telles que formation d'ensembles réunion, intersection et/ou différence, à partir de corps élémentaires (9, 10, 11) facilement définissables par voie mathématique, ces corps élémentaires (9, 10, 11) étant corrigés respectivement de la valeur du rayon d'outil de sorte que le contour d'un corps réunion se décale vers l'extérieur et le contour d'un corps différence se décale vers l'intérieur et que ces contours corrigés (8, 12, 14) soient des trajectoires potentielles du centre d'outil, et suivant lequel on détermine les données de trajectoire du centre d'outil réellement nécessaires pour la fabrication de la pièce (8), à l'aide de points d'intersection (a₁ à h₄) entre une trame de lignes auxiliaires (a, b, c, d; e, f, g, h), d'une part, les trajectoires potentielles du centre d'outil (8′) d'autre part, et on analyse les points d'intersection (a₁ à h₄) quant à leur appartenance à un corps obtenu par application des opérations précitées de la théorie des ensembles aux corps élémentaires corrigés.
